(19) Europäisches Patentamt
European Patent Office
Office européen des brevets

(11) **EP 3 445 793 B1**

(12) **EUROPEAN PATENT SPECIFICATION**

(45) Date of publication and mention
of the grant of the patent:
**01.01.2020 Bulletin 2020/01**

(21) Application number: **17711219.0**

(22) Date of filing: **20.03.2017**

(51) Int Cl.:
*C08F 210/06* *(2006.01)*   *B33Y 70/00* *(2015.01)*
*D01F 6/30* *(2006.01)*

(86) International application number:
**PCT/EP2017/056495**

(87) International publication number:
**WO 2017/182209 (26.10.2017 Gazette 2017/43)**

(54) **PROPYLENE BASED FILAMENT FOR 3D PRINTER**

PROPYLENBASIERTER FADEN FÜR 3D-DRUCKER

FILAMENT À BASE DE PROPYLÈNE POUR IMPRIMANTE 3D

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2016 EP 16166589**

(43) Date of publication of application:
**27.02.2019 Bulletin 2019/09**

(73) Proprietor: **Basell Poliolefine Italia S.r.l.
20121 Milano (IT)**

(72) Inventors:
• **DE PALO, Roberto
44122 Ferrara (IT)**
• **CAVALIERI, Claudio
44122 Ferrara (IT)**

(74) Representative: **Sacco, Marco
Basell Poliolefine Italia S.r.l.
Intellectual Property
P.le Donegani, 12
44122 Ferrara (IT)**

(56) References cited:
**EP-A1- 1 270 628     EP-A1- 1 484 345**

• **O.S. CARNEIRO ET AL: "Fused deposition
modeling with polypropylene", MATERIALS &
DESIGN, vol. 83, 20 June 2015 (2015-06-20), pages
768-776, XP055312954, AMSTERDAM, NL ISSN:
0264-1275, DOI: 10.1016/j.matdes.2015.06.053**
• **Manfred Kohlen: "ITespresso.de German
RepRap liefert lebensmittelkonformes
3D-Druckmaterial - ITespresso.de", , 16 January
2014 (2014-01-16), XP055258389, Retrieved from
the Internet:
URL:http://www.itespresso.de/2014/01/16/ge
rman-reprap-liefert-lebensmittelkonformes-
3d-druckmaterial/?print=1 [retrieved on
2016-03-15]**

**Description**

FIELD OF THE INVENTION

The present disclosure relates to a filament comprising a propylene ethylene copolymer to be used in an extrusion-based 3D printer.

BACKGROUND OF THE INVENTION

An extrusion-based 3D printer is used to build a 3D model from a digital representation of the 3D model in a layer-by-layer manner by extruding a flowable modeling material. A filament of the modeling material is extruded through an extrusion tip carried by an extrusion head, and is deposited as a sequence of roads on a substrate in an x-y plane. The extruded modeling material fuses to previously deposited modeling material, and solidifies upon a drop in temperature. The position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the filament clearly plays an important role, changing the material of the filament the final mechanical and aesthetic properties of the finished object change. Usually in the art filament of polylactic acid (PLA) or acrylonitrile, butadiene, styrene (ABS) polymer or polyamides are used.

One of the most important properties of a filament is constant diameter (usually 1.75 mm or 3 mm) otherwise it is not possible to finely tune the amount of material in the printed object. This property is not easily achieved and depends on the characteristics of the polymer.

Furthermore the filament, once prepared, has to be printable, i.e. it has to be possible to achieve a good adhesion with the plate and among the layers.

Propylene based polymers has been proposed as polymers suitable for making filaments, however from the tests carried out by the applicant the propylene based filaments available on the market gave poor results in the print test.

Therefore there is the need for propylene based polymers that can be used as a filament in a 3D printer.

SUMMARY OF THE INVENTION

The applicant found a consumable filament for use in an extrusion-based additive manufacturing system comprising a propylene ethylene copolymer having:

- ethylene derived units content ranging from 3.0 wt% to 12.0 wt%;
- MFR L (Melt Flow Rate according to ISO 1133, condition L, i.e. 230°C and 2.16 kg load) ranging from 4 to 20 g/10 min; and
- xylene solubles measured at 25°C comprised between 3 wt% and 30 wt% ; .

BRIEF DESCRIPTION OF THE DRAWINGS

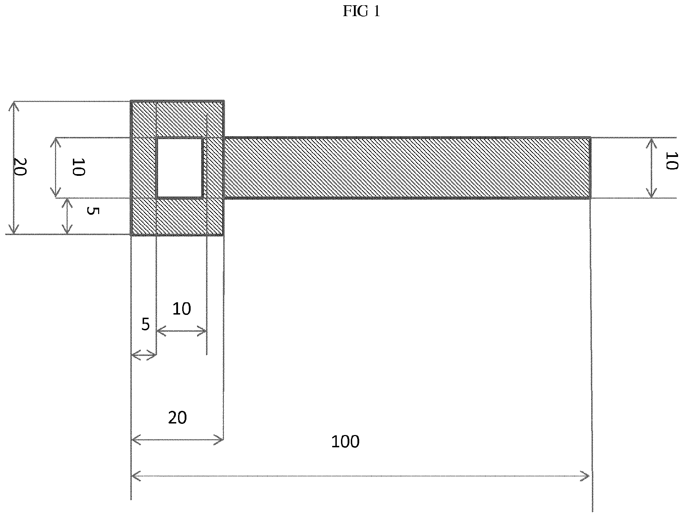

Figure 1 is the front view of the sample used in the print tests of the examples. The measure are given in mm, the sample once completely printed is 5 mm thick..

DETAILED DESCRIPTION OF THE INVENTION

The applicant found a consumable filament for use in an extrusion-based additive manufacturing system comprising a propylene ethylene copolymer having:

- ethylene derived units content ranging from 3.0 wt% to 12.0 wt% ; preferably from 3.5 wt% to 10.0 wt%; more preferably from 3.8 wt% to 8.0 wt%;
- MFR L (Melt Flow Rate according to ISO 1133, condition L, i.e. 230°C and 2.16 kg load) from 4 to 20 g/10 min, preferably from 5 to 10 g/10 min; more preferably from 6 to 8 g/10 min; and
- xylene solubles measured at 25°C comprised between 3 wt% and 30 wt% ; preferably between 4 wt% and 25 wt%.

The term copolymer means that the polymer is formed by only to monomers, propylene and ethylene.

The propylene/ethylene copolymer of the present invention can be extruded in a filament having a constant diameter, the diameter of the filament being that of one used in the art such as 1.75 mm or 3 mm. Other possible diameters can also be used. The variation from the nominal diameter is +/- 0.05 mm preferably +/- 0.03 mm.

When amorphous polymeric materials, such as acrylonitrile-butadiene-styrene (ABS) resins and polycarbonate resins are used they have little or no ordered arrangements of their polymer chains in their solid states. This reduces the effects of curling and plastic deformation in the resulting 3D model or support structure.

Crystalline or semicrystalline polymer exhibits superior mechanical properties but due to the crystallinity when used for building 3D model they show undesirable shrinkage effects both when the extruded road is deposited to form a portion of a layer of a 3D model and when the road is cooled. The shrinkage effects renders the crystalline or semicrystalline polymers not usable for the building of 3D object in a an extrusion-based additive manufacturing process.

The applicant found that the propylene ethylene copolymer of the present disclosure can be advantageously used for building a 3D model comprising semi crystalline polymers as shown by the amount of xylene soluble material.

The propylene ethylene copolymer of the present disclosure is available in the market. Examples of copolymers can be RP220M sold by LyondellBasell, BOREALIS RD204 CF. Another possible similar polymer is LyondellBasell CLYRELL RC 1908.

The filament object of the present invention can additionally contain additives normally used in the art such as antioxidants, slipping agents, process stabilizers, antiacid and nucleants.

The filament can additionally contains fillers known in the art such as talc, calcium carbonate, wollastonite, glass fibers, glass spheres and carbon derived grades.

Furthermore the filament of the present invention can also contains wood powder, metallic powder marble powder and similar materials normally used for obtaining 3D object having particular aesthetic appearances or improved mechanics.

The following examples are given to illustrate and not to limit the present invention.

EXAMPLES

The data of the propylene polymer materials were obtained according to the following methods:

**Xylene-soluble fraction at 25°C**

The Xylene Soluble fraction was measured according to ISO 16152, 2005, but with the following deviations (between brackets is what is prescribed by the ISO 16152)
The solution volume is 250 ml (200 ml)
During the precipitation stage at 25°C for 30 min, the solution, for the final 10 minutes, is kept under agitation by a magnetic stirrer (30 min, without any stirring at all)
The final drying step is done under vacuum at 70°C (100 °C)
The content of said xylene-soluble fraction is expressed as a percentage of the original 2.5 grams and then, by difference (complementary to 100), the xylene unsoluble %

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S$$

$$PPE = 100\ T_{\beta\delta}/S$$

$$EPE = 100\ T_{\delta\delta}/S$$

$$PEP = 100\ S_{\beta\beta}/S$$

$$PEE = 100\ S_{\beta\delta}/S$$

$$EEE = 100\ (0.25\ S_{\gamma\delta} + 0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:
E% mol = 100 * [PEP+PEE+EEE]The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left( \frac{EEE + PEE}{PEP} + 1 \right) - \left( \frac{P}{E} + 1 \right)\left( \frac{EEE + PEE}{PEP} + 1 \right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

**Melt flow rate (MFR)**

The melt flow rate MFR of the polymer was determined according to ISO 1133 (230°C, 2.16 Kg).
**The following polymers have been used**

PP1

Propylene homopolymer having an MFR 6,5 and a fraction soluble in xylene at 25°C of < 4%

PP2

Commercial filament of diameter 1.75 mm sold under the tradename PP REPRAP BLACK FILAMENT German RepRap PP Filament 600g, a random propylene ethylene copolymer having an ethylene content of 3 wt% an MFR of 2 g/10 min and a fraction soluble in xylene at 25°C of 6.2 wt%.

PP3

Propylene ethylene copolymer sold under the tradename MOPLEN RP220M being a random propylene ethylene copolymer having an ethylene content of 4 wt% an MFR of 7 and a fraction soluble in xylene at 25°C of 7%

Polymers PP1 and PP3 have been extruted to form a filament having 1.75 mm of diameter. In order to be able to extrude PP1 10 wt% of talc has been added.

**Print test**

The printer was a 3D Rostock delta printer. The printer conditions are the followings:

| Filament diameter | mm | 1,75 ±0.03 |
|---|---|---|
| Nozzle diameter | mm | 0,4 |
| | | |
| Temperature first layer | °C | 245 |
| Temperature other layers | °C | 245 |
| | | 1 |
| Layer high | mm | 0,2 |
| Temperature plate | °C | 100 |
| Support material to adhere on the plate | | vinylic glue |
| Plate material. | | glass |
| Infill | | 100% |
| printer speed | mm/min | 3600 |
| Speed first layer | | 60% |
| Speed other layers | | 100% |
| Speed infill | mm/min | 4.000 |

The sample to be printed is reported in Fig 1. For each filament 5 printer tests have been carried out, the print has been stopped when one side of the object is detached from the plane and thus the print of the object was no longer possible . The results are reported on table 1

Table 1

| material | height before detach (Z) (mm) (average measure) |
|---|---|
| PP1* | 0.8 |
| PP2* | 1.2 |
| PP3 | full (5 mm) |
| * comparative | |

From table 1 clearly results that only PP3, that is the material according to the invention, can be used to fully print the sample.

**Claims**

1. Use of a consumable filament comprising a propylene ethylene copolymer having:

- ethylene derived units content ranging from 3.0 wt% to 12.0 wt%;
- MFR L (Melt Flow Rate according to ISO 1133, condition L, i.e. 230°C and 2.16 kg load) from 4 to 20 g/10 min; and

- xylene solubles measured at 25°C comprised between 3 wt% and 30 wt%;

in an extrusion-based additive manufacturing system.

2. Use of the consumable filament according to claim 1 wherein in the propylene copolymer the ethylene derived units content ranges from 3.5 wt% to 10.0 wt%.

3. Use of the consumable filament according to claims 1 or 2 wherein in the propylene copolymer has a MFR L (Melt Flow Rate according to ISO 1133, condition L, i.e. 230°C and 2.16 kg load) ranging from 5 to 10 g/10 min.

4. Use of the consumable filament according to anyone of claims 1-3 wherein in the propylene copolymer the xylene solubles measured at 25°C is comprised between 4 wt% and 25 wt%.

5. Use of the consumable filament according to anyone of claims 1-4 wherein in the propylene copolymer the ethylene derived units content ranges from 3.8 wt% to 8.0 wt%.

6. Use of the consumable filament according to claims 1 or 5 wherein in the propylene copolymer has a MFR L (Melt Flow Rate according to ISO 1133, condition L, i.e. 230°C and 2.16 kg load) ranging from 6 to 8 g/10 min.

7. Use of the consumable filament according to anyone of claims 1-6 wherein the consumable filament has a constant diameter having a variation of +/- 0..05 mm.

8. Use of the consumable filament according to anyone of claims 1-7 wherein the consumable filament has has a constant diameter having a variation of +/- 0.03 mm.

9. Use of the consumable filament according to anyone of claims 1-8 wherein the consumable filament has a diameter of 1.75 mm or 3 mm +/- 0.05 mm.

10. Use of the consumable filament according to anyone of claims 1-8 wherein the consumable filament has a diameter of 1.75 mm or 3 mm +/- 0.03 mm.

11. Use of the consumable filament of claims 1-10 for the production of 3D printed articles.

**Patentansprüche**

1. Verwendung eines verbrauchbaren Fadens, der ein Propylen-Ethylen-Copolymer umfasst, mit:

- einem Gehalt an von Ethylen abgeleiteten Einheiten im Bereich von 3,0 Gew.% bis 12,0 Gew.%;
- einer MFR L (Schmelzflussrate gemäß ISO 1133, Bedingung L, d. h. 230 °C und 2,16 kg Last) von 4 bis 20 g/10 min; und
- einem Gehalt an xylollöslichen Materialien, gemessen bei 25 °C, zwischen 3 Gew.% und 30 Gew.%;

in einem extrusionsbasierten additiven Fertigungssystem.

2. Verwendung des verbrauchbaren Fadens nach Anspruch 1, wobei der Gehalt an von Ethylen abgeleiteten Einheiten in dem Propylencopolymer im Bereich von 3,5 Gew.% bis 10,0 Gew.% liegt.

3. Verwendung des verbrauchbaren Fadens nach Anspruch 1 oder 2, wobei das Propylencopolymer eine MFR L (Schmelzflussrate gemäß ISO 1133, Bedingung L, d. h. 230 °C und 2, 16 kg Last) im Bereich von 5 und 10 g/10 min aufweist.

4. Verwendung des verbrauchbaren Fadens nach einem der Ansprüche 1 bis 3, wobei der Gehalt an xylollöslichen Materialien, gemessen bei 25 °C, in dem Propylencopolymer zwischen 4 Gew.% bis 25 Gew.% liegt.

5. Verwendung des verbrauchbaren Fadens nach einem der Ansprüche 1 bis 4, wobei der Gehalt an von Ethylen abgeleiteten Einheiten in dem Propylencopolymer im Bereich von 3, 8 Gew. % bis 8, 0 Gew. % liegt.

**6.** Verwendung des verbrauchbaren Fadens nach Anspruch 1 oder 5, wobei das Propylencopolymer eine MFR L (Schmelzflussrate gemäß ISO 1133, Bedingung L, d. h. 230 °C und 2, 16 kg Last) im Bereich von 6 und 8 g/10 min aufweist.

**7.** Verwendung des verbrauchbaren Fadens nach einem der Ansprüche 1 bis 6, wobei der verbrauchbare Faden einen konstanten Durchmesser mit einer Schwankung von +/- 0,05 mm aufweist.

**8.** Verwendung des verbrauchbaren Fadens nach einem der Ansprüche 1 bis 7, wobei der verbrauchbare Faden einen konstanten Durchmesser mit einer Schwankung von +/- 0,03 mm aufweist.

**9.** Verwendung des verbrauchbaren Fadens nach einem der Ansprüche 1 bis 8, wobei der verbrauchbare Faden einen Durchmesser von 1,75 mm oder 3 mm +/- 0,05 mm aufweist.

**10.** Verwendung des verbrauchbaren Fadens nach einem der Ansprüche 1 bis 8, wobei der verbrauchbare Faden einen Durchmesser von 1,75 mm oder 3 mm +/- 0,03 mm aufweist.

**11.** Verwendung des verbrauchbaren Fadens nach den Ansprüchen 1 bis 10 zur Produktion von 3D-gedruckten Gegenständen.

**Revendications**

**1.** Utilisation d'un filament consommable comprenant un copolymère de propylène-éthylène possédant :

   - une teneur en motifs dérivés de l'éthylène dans une plage de 3,0% en poids à 12,0% en poids ;
   - un MFR L (indice de fluidité à chaud selon la norme ISO 1133, condition L, c'est-à-dire à 230°C et sous une charge de 2,16 kg) de 4 à 20 g/10 min ; et
   - des matières solubles dans le xylène, mesurées à 25°C, entre 3% en poids et 30% en poids ;

dans un système de fabrication additive à base d'extrusion.

**2.** Utilisation du filament consommable selon la revendication 1, la teneur en motifs dérivés de l'éthylène dans le copolymère de propylène étant située dans une plage de 3,5% en poids à 10,0% en poids.

**3.** Utilisation du filament consommable selon les revendications 1 ou 2, le copolymère de propylène possédant un MFR L (indice de fluidité à chaud selon la norme ISO1133, condition L, c'est-à-dire à 230°C et sous une charge de 2,16 kg) situé dans une plage de 5 à 10 g/10 min.

**4.** Utilisation du filament consommable selon l'une quelconque des revendications 1-3, les matières solubles dans le xylène mesurées à 25°C dans le copolymère de propylène étant situées entre 4% en poids et 25% en poids.

**5.** Utilisation du filament consommable selon l'une quelconque des revendications 1-4, la teneur en motifs dérivés de l'éthylène dans le copolymère de propylène étant située dans une plage de 3,8% en poids à 8,0% en poids.

**6.** Utilisation du filament consommable selon les revendications 1 ou 5, le copolymère de propylène possédant un MFR L (indice de fluidité à chaud selon la norme ISO 1133, condition L, c'est-à-dire à 230°C et sous une charge de 2,16 kg) situé dans une plage de 6 à 8 g/10 min.

**7.** Utilisation du filament consommable selon l'une quelconque des revendications 1-6, le filament consommable possédant un diamètre constant doté d'une variation de +/-0,05 mm.

**8.** Utilisation du filament consommable selon l'une quelconque des revendications 1-7, le filament consommable possédant un diamètre constant doté d'une variation de +/-0,03 mm.

**9.** Utilisation du filament consommable selon l'une quelconque des revendications 1-8, le filament consommable possédant un diamètre de 1,75 mm ou de 3 mm +/- 0,05 mm.

**10.** Utilisation du filament consommable selon l'une quelconque des revendications 1-8, le filament consommable possédant un diamètre de 1,75 mm ou de 3 mm +/- 0,03 mm.

11. Utilisation du filament consommable selon les revendications 1-10 pour la fabrication d'articles imprimés en 3D.

FIG 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LYONDELLBASELL.** Another possible similar polymer is LyondellBasell CLYRELL RC. *BOREALIS RD204 CF,* 1908
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536

- **M. KAKUGO ; Y. NAITO ; K. MIZUNUMA ; T. MIYATAKE.** Carbon-13 NMR determination of monomer sequence distribution in ethylene-propylene copolymers prepared with $\delta$-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536